# EUROPEAN PATENT APPLICATION

(11) **EP 2 056 570 A1**
(43) Date of publication of application: **06.05.2009**
(21) Application number: 07119522.6
(22) Date of filing: 29.10.2007
(51) Int. Cl.: H04L 29/08

(54) **Session and media binding to common control**

(71) Applicant: Nokia Siemens Networks Oy, 02610 Espoo (FI)
(72) Inventor: Räsänen, Juha A., 02660, Espoo (FI); Tuohino, Markku, 02130, Espoo (FI)
(74) Representative: TBK-Patent

(57) **Abstract**

There are provided a method and structural means for session and media binding to a common control, in particular to a common policy control. The method may basically comprise extracting a user identification parameter from a private user identity during session registration, retrieving the user identification parameter in accordance with a public user identity during session handling, obtaining a corresponding user identification parameter during bearer handling, and establishing a binding for policy-controlled sessions of the user to a policy control entity on the basis of the user identification parameter.

## Description

### Field of the invention

The present invention relates to session and media binding to a common control, in particular to a common policy control entity. The present invention particularly relates to policy control in an evolved communication network architecture.

### Background of the invention

In view of an increasing number of communication technologies and technological concepts in use, there is a trend of convergence of networks and systems based on such different technologies and concepts into overall network systems. Examples for such different technologies may include GPRS (General Packet Radio Service) or CDMA (Code Divisional Multiple Access) or, in general, IP-based (IP: Internet Protocol) mobile or fixed networks. Further, there is a trend of convergence of different services, functions and applications into overall network systems. Such converged network systems are often referred to as next generation networks. Examples for such next generation networks include networks specified by 3GPP (Third Generation Partnership Project) or IETF (Internet Engineering Task Force) or TISPAN (Telecom and Internet Converged Services and Protocols for Advanced Networks) .

An example of standardization efforts in this field includes the 3GPP work on system architecture evolution (SAE) and/or long-term evolution (LTE). This work includes among others GPRS enhancements for E-UTRAN (Evolved Universal Terrestrial Radio Access Network) access, as currently specified in 3GPP TS 23.401 V1.3.0, and architecture enhancements for non-3GPP access, as currently specified in 3GPP TS 23.402 V1.4.0.

The specification 3GPP TS 23.401 covers both roaming and non-roaming scenarios and all aspects, including mobility between E-UTRAN and pre-E-UTRAN 3GPP radio access technologies, policy control and charging, and authentication. The specification 3GPP TS 23.402 specifies a provision of IP connectivity using non-3GPP accesses to the evolved 3GPP packet-switched domain.

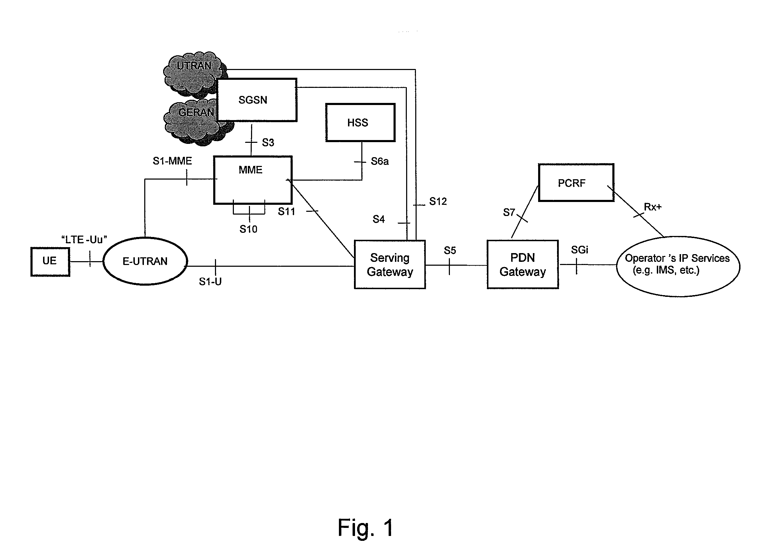

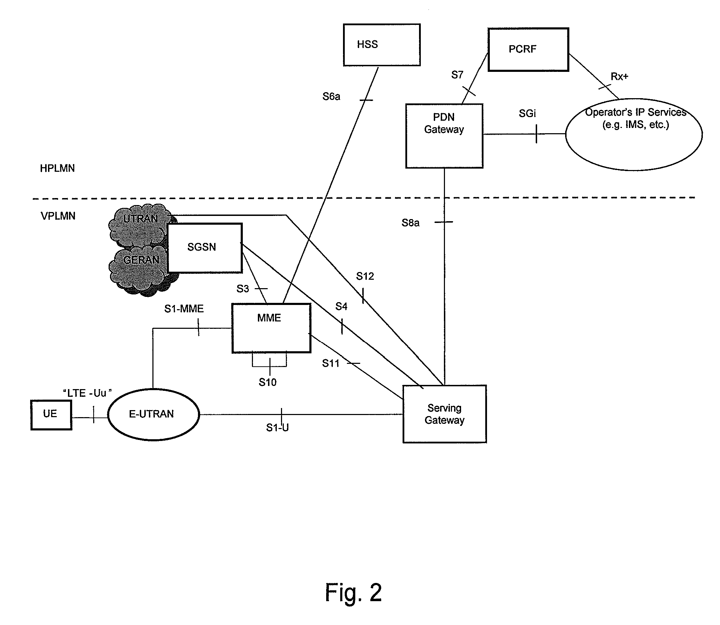

Fig. 1 depicts a schematic block diagram of an architecture reference model for a non-roaming scenario, and Fig. 2 depicts a schematic block diagram of an architecture reference model for a roaming scenario, as specified in 3GPP TS 23.401, and as underlying the present application.

In Figs. 1 and 2, the abbreviations used are as follows: UE stands for user equipment, SGSN stands for serving GPRS support node, MME stands for mobility management entity, UTRAN stands for universal terrestrial radio access network, GERAN stands for GSM EDGE (Enhanced Data rate for GSM Evolution) radio access network, HSS stands for home subscriber server, PDN stands for packet data network, PCRF stands for policy and charging rules function, IMS stands for IP multimedia subsystem, HPLMN and VPLMN stand for home and visited public land mobile network, respectively.

It is to be understood that the architecture reference models of Figs. 1 and 2 are examples for the description and the understanding of the present invention. The present invention may however equally be applied to or in architectures which are different from those as depicted.

As is illustrated in Figs. 1 and 2, the IP multimedia subsystem IMS is an example of a communication network in relation to which the principles described herein may be applied. An IMS network may be considered as a non-limiting example of an IP-based delivery platform for the provision of IP multimedia services including audio, video, text, chat, etc. For details on IMS, reference is made to the specification 3GPP TS 23.228 V8.2.0. In an IMS network, the session initiation protocol (SIP) is usually employed as a session control protocol, and the Diameter protocol specified by the IETF is usually employed as an authentication protocol, and is used for accessing and retrieving the user profile in the core IMS.

As is also illustrated in Figs. 1 and 2, system architecture evolution usually involves different access networks, e.g. UTRAN and GERAN. Various accesses, i.e. access networks and/or technologies, may allocate different IP addresses to a user equipment. Thus, a user equipment may have/communicate different media or different sessions simultaneously through different accesses. This leads to certain problems e.g. as regards policy and charging control (PCC).

Namely, a network or system, including both home and visited networks, may have several policy and charging rules functions (PCRF), but the same PCRF is supposed to control the media and sessions of a given terminal/user equipment to avoid complicated synchronization mechanisms between different PCRFs.

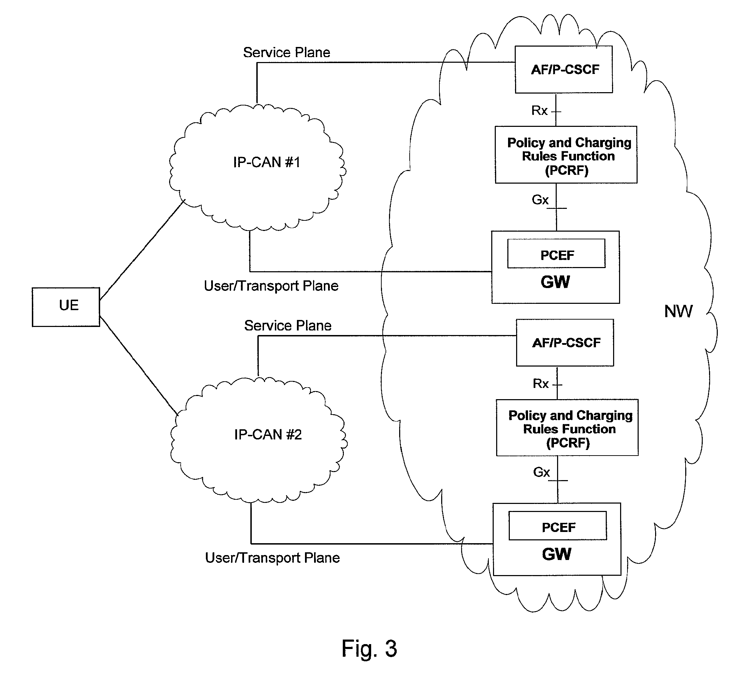

Fig. 3 depicts a schematic block diagram of a logical policy control architecture in a system with multiple accesses.

According to Fig. 3, a user equipment UE is simultaneously connected with a network system NW via a first and a second access network, e.g. IP connectivity access networks (IP-CAN). Conventionally, the policy and charging control depends on the access network, via which the connection is established. Thus, the policy and charging control for the connection via IP-CAN#1 is handled by a first set of an application function AF and/or proxy call session control function P-CSCF, a policy and charging rules function PCRF, and a gateway GW including a policy and charging enforcement function PCEF, whereas the policy and charging control for the connection via IP-CAN#2 is handled by a separate second set of AF/P-CSCF, PCRF and GW/PCEF.

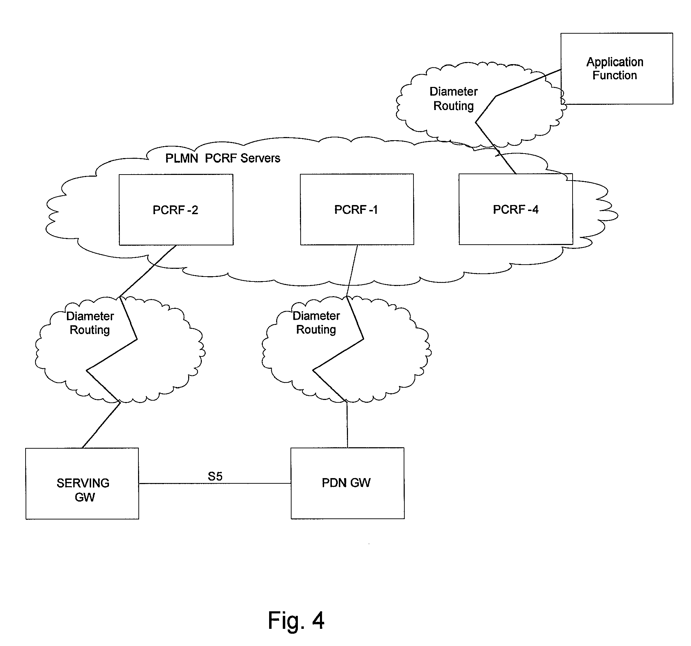

This situation is also illustrated by Fig. 4 which depicts a schematic architectural overview on the basis of the architecture reference model of Fig. 1 or 2.

For overcoming the problems related to the existence of a plurality of policy control entities in a network, it is necessary that all related network elements (like GWs, AF, visited PCRF) find a common PCRF. To this end, there has been introduced the concept of a "cloud of PCRFs".

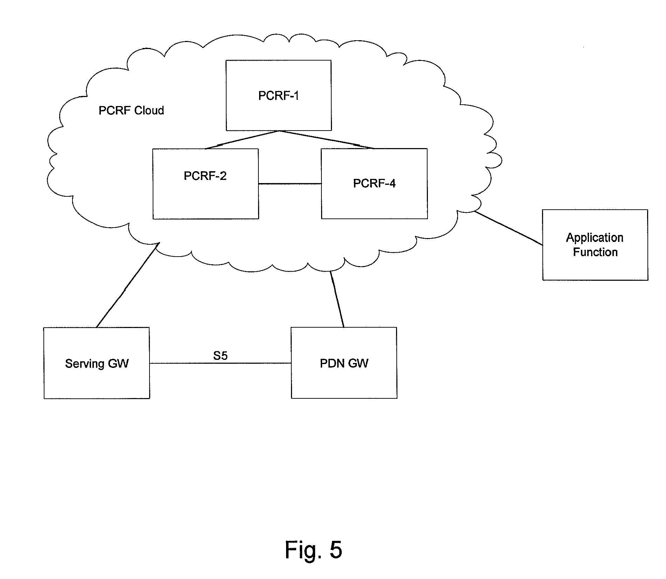

Fig. 5 depicts a schematic architectural overview of the concept of a PCRF cloud based on the situation according to Fig. 4.

Within this concept the element contacting a PCRF needs to know only the address or contact information to the cloud of PCRFs. The cloud of PCRFs may then solve the issue of allocating the same PCRF to policy control sessions of the same use or user equipment.

In this context, it has for example been proposed to use standard Diameter realm-based routing or to push an initial PCRF selection around the network. However, both of these proposals suffer from several drawbacks.

In particular, when policy control is applied in an IMS network, there occur problems concerning the allocation of user sessions to a common policy control entity.

On the one hand, the IP address of a user equipment cannot be used as a user identity to correlate between media streams or sessions of the user equipment using different accesses. This is because the IP address allocated to the user equipment is different in different accesses. Namely, a freely assignable address allocated to the user equipment by a certain access does not lead to the same PCRF as another freely assignable address allocated by another access.

On the other hand, the IMS/SIP session establishment and the 3GPP user/transport plane bearer establishment (PDP (packet data protocol) context establishment) do not have a common parameter suitable for user identification. Thus, there is not available any means that could be used by the PCRF cloud to bind/connect an IMS/SIP session (controlled e.g. by the AF/P-CSCF) and the user/transport plane (handled e.g. by various gateways) to the same PCRF.

Accordingly, there resides an unresolved problem in the lack of unique and appropriate means for allocating the same PCRF to policy control sessions of the same user equipment.

### Summary of the invention

It is an object of the present invention to alleviate above-mentioned problems and drawbacks. In particular, it is an object of the present invention to provide means for allocating a common control to sessions of the same user equipment.

According to a first aspect of the invention, this object is for example achieved by a method comprising extracting a user identification parameter from a private user identity during session registration, retrieving the user identification parameter in accordance with a public user identity during session handling, obtaining a corresponding user identification parameter during bearer handling, and establishing a binding for policy-controlled sessions of the user to a policy control entity on the basis of the user identification parameter.

According to further advantageous developments:
- the method further comprises storing the public user identity during session registration in association with the extracted user identification parameter,
- the retrieving of the user identification parameter during session handling is based on the public user identity stored during session registration and a public user identity received in a session establishment or modification message,
- the method further comprises sending the user identification parameter retrieved during session handling and the user identification parameter obtained during bearer handling to the policy control entity, and wherein the establishing of the binding is based on the sent user identification parameters,
- the establishing of the binding comprises at least one of selecting, in a first instance, a policy control entity using the user identification parameter retrieved during session handling, and selecting, in a second instance, a policy control entity using the user identification parameter obtained during bearer handling, wherein the establishing of the binding is based on the policy control entity selected in at least one of the first and the second instance so that policy-controlled sessions of the user are controlled by the same policy control entity,
- the establishing of the binding comprises selecting a common policy control entity from a plurality of available policy control entities so that policy-controlled sessions of the user are controlled by the same policy control entity,
- the method further comprises determining that the user is roaming, transmitting the user identification parameter from the policy control entity to a second policy control entity concerned with the roaming user, and establishing a second binding for policy-controlled sessions of the user to the second policy control entity on the basis of the user identification parameter,
- the binding is established to a predetermined local policy control entity on the basis of the roaming of the user,
- the second binding is established on the basis of priorities or markings of available policy control entities,
- the session registration and the session handling pertain to a session in accordance with an IP-based multimedia subsystem, e.g. IMS, and/or
- the policy control entity is a set of at least one policy and charging rules function, PCRF.

According to a second aspect of the invention, this object is for example achieved by an apparatus comprising a processor configured to extract a user identification parameter from a private user identity during session registration, a processor configured to retrieve the user identification parameter in accordance with a public user identity during session handling, a processor configured to obtain a corresponding user identification parameter during bearer handling, and a processor configured to establish a binding for policy-controlled sessions of the user to a policy control entity on the basis of the user identification parameter.

According to further advantageous developments:
- the apparatus further comprises a storage configured to store the public user identity during session registration in association with the extracted user identification parameter,
- a processor is configured to retrieve the user identification parameter during session handling based on the public user identity stored during session registration and a public user identity received in a session establishment or modification message,
- the apparatus further comprises a sender configured to send the user identification parameter retrieved during session handling to the policy control entity, a sender configured to send the user identification parameter obtained during bearer handling to the policy control entity, and wherein a processor is configured to establish the binding based on the sent user identification parameters,
- the apparatus further comprises at least one of a processor configured to select, in a first instance, a policy control entity using the user identification parameter retrieved during session handling, and a processor configured to select, in a second instance, a policy control entity using the user identification parameter obtained during bearer handling, wherein the establishing of the binding is based on the policy control entity selected in at least one of the first and the second instance so that policy-controlled sessions of the user are controlled by the same policy control entity,
- a processor is configured to establish the binding by selecting a common policy control entity from a plurality of available policy control entities so that policy-controlled sessions of the user are controlled by the same policy control entity,
- the apparatus further comprises a processor configured to determine that the user is roaming, a transmitter configured to transmit the user identification parameter from the policy control entity to a second policy control entity concerned with the roaming user, and a processor configured to establish a second binding for policy-controlled sessions of the user to the second policy control entity on the basis of the user identification parameter,
- the apparatus is included in an IP-based multimedia subsystem, and/or
- the apparatus comprises a functionality of at least one of an application function, AF, a proxy call session control function, P-CSCF, a policy and charging enforcement function, PCEF, a gateway, GW, and at least one policy and charging rules function, PCRF.

According to a third aspect of the invention, this object is for example achieved by a computer program product comprising software code portions for causing an apparatus, on which the computer program is executed, to carry out the method according to the first aspect as set out above.

According to a fourth aspect of the invention, this object is for example achieved by a computer-readable medium embodying the computer program product according to the third aspect as set out above.

According to any one of the above-mentioned aspects:
- the user identification parameter is one of an international mobile subscriber identity, IMSI, an IP multimedia public identity, IMPU, a home network domain name, and an Internet protocol, IP, address of the user, and/or
- the private user identity is an IP multimedia private identity, IMPI, and wherein the public user identity is an IP multimedia public identity, IMPU.

### Brief description of the drawings

In the following, the present invention will be described in greater detail by way of example with reference to the accompanying drawings, in which
Fig. 1 depicts a schematic block diagram of an architecture reference model for a non-roaming scenario,
Fig. 2 depicts a schematic block diagram of an architecture reference model for a roaming scenario,
Fig. 3 depicts a schematic block diagram of a logical policy control architecture in a system with multiple accesses,
Fig. 4 depicts a schematic architectural overview on the basis of the architecture reference model of Fig. 1 or 2,
Fig. 5 depicts a schematic architectural overview of the concept of a PCRF cloud based on the situation according to Fig. 4,
Fig. 6 depicts a signaling diagram for binding control sessions of a user, in which an embodiment of the present invention is utilized,
Fig. 7 depicts a block diagram of an equipment for binding control sessions of a user, by which an exemplary structural implementation of an embodiment of the present invention is utilized, and
Fig. 8 depicts a block diagram of an equipment for binding control sessions of a user, by which an exemplary structural implementation of another embodiment of the present invention is utilized.

### Detailed description of embodiments of the present invention

The present invention is described herein with reference to particular non-limiting examples. A person skilled in the art will appreciate that the invention is not limited to these examples, and may be more broadly applied.

In particular, the present invention and its embodiments are mainly described in relation to an evolved network architecture with multiple access technologies, as e.g. known from system architecture evolution (SAE) and/or long-term evolution (LTE) standardized by 3GPP. As such, the description of the embodiments given herein specifically refers to terminology which is directly related thereto. In this regard, for example, policy and charging control is taken as a non-limiting example, and thus respective functions such as policy and charging control functions (PCRF) as well as policy and charging enforcement functions (PCEF) are used as non-limiting examples for (policy) control entities, while any other control entities may also be utilized as long as compliant with the described features and environment.

In particular, the present invention and its embodiments are mainly described in relation to an IP Multimedia Subsystem (IMS) used as a non-limiting example for a network configuration. As such, the description of the embodiments given herein specifically refers to terminology which is directly related to IMS. In this regard, SIP (session initiation protocol) terminology is used for session signaling purposes, while any other session signaling mechanism may also be utilized as long as compliant with the described features and environment.

Such terminology is only used in the context of the presented non-limiting examples, and does naturally not limit the invention in any way.

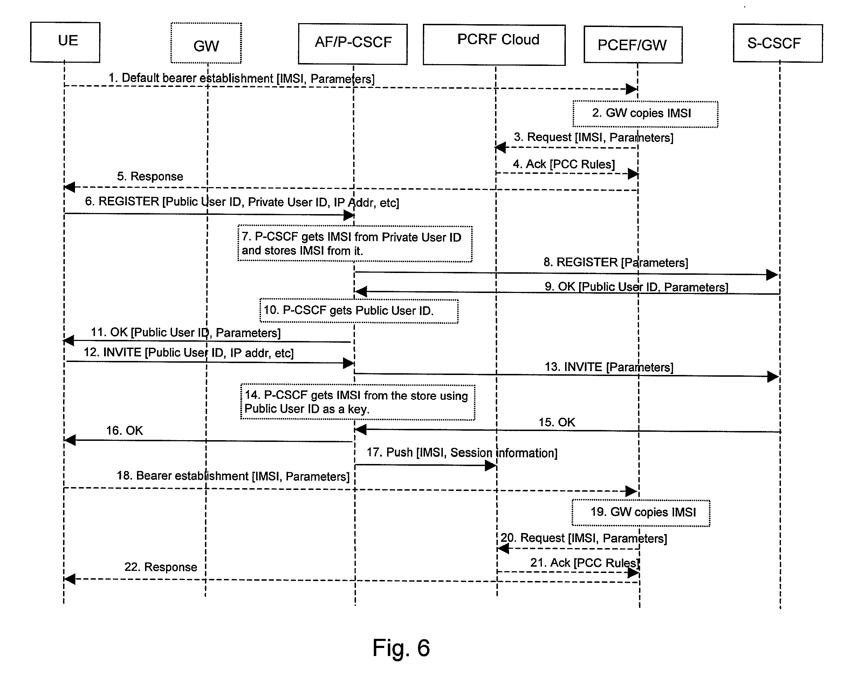

Fig. 6 depicts a signaling diagram for binding control sessions of a user, in which an embodiment of the present invention is utilized.

Namely, Fig. 6 depicts a simplified example of getting user identification parameters for a PCRF cloud for binding separate control sessions towards the PCRF cloud to the same PCRF entity. This example is based on the assumption of a policy-controlled IMS/SIP session in an evolved system architecture. It is further based on the assumption of a non-roaming case, i.e. the user being located in its home network, and a user-initiated bearer establishment.

The system architecture underlying the example of Fig. 6 is essentially as follows. A user equipment UE is connected with an application function AF or proxy call session control function P-CSCF, respectively, via a gateway GW. Further, the user equipment UE is connected with a policy and charging enforcement function PCEF or gateway GW, respectively. The AF/P-CSCF is connected with a set of policy control entities, i.e. a plurality of policy and charging rules functions PCRFs being denoted by "PCRF cloud". Further, the AF/P-CSCF is connected with a serving call session control function S-CSCF, and the so-called PCRF cloud is connected with the PCEF/GW entity.

According to the example of Fig. 6, there occurs a sequence of a default bearer establishment (steps 1 to 5), an IMS session registration (steps 6 to 11), an IMS session handling, i.e. establishment or modification (steps 12 to 17), and a bearer handling, i.e. establishment or modification (steps 18 to 22). The IMS session registration and the IMS session handling pertain to the service plane, and the bearer establishment pertains to the user/transport plane.

For default bearer establishment, the user equipment UE attaches to the network, i.e. the PCEF/GW entity, and a default bearer is established (step 1). Subsequently, the PCEF/GW entity takes the user identity information, e.g. IMSI from the bearer establishment message (step 2), possibly requests policy and charging control (PCC) rule(s) from the PCRF cloud and thus sends the user identity information, e.g. IMSI to the PCRF cloud (step 3). In response thereto, the PCRF responds by possibly sending the requested PCC rule(s) in step 4. Then, in step 5, the PCEF/GW entity responds to the user-initiated default bearer establishment.

For IMS session registration, the user equipment UE registers to the IMS network part by way of a session registration message to the AF/P-CSCF entity (step 6). The registration message may be a REGISTER message according to the SIP protocol, which contains as parameters e.g. a public user identity IMPU, a private user identity IMPI, and an IP address of the user. In step 7, the AF/P-CSCF entity copies the private user identity IMPI from the registration message, and takes (extracts) and saves the IMSI as a user identification parameter from the private user identifier IMPI. As the public user identity IMPU may be temporary at this phase, it may not be used. Subsequently, the AF/P-CSCF entity sends the registration message to the S-CSCF (step 8), and the S-CSCF acknowledges thereto, wherein the response includes the user's public user identities (step 9). In step 10, the AF/P-CSCF entity stores the thus received public user identity/entities (IMPU). Then, in step 11, the AF/P-CSCF entity acknowledges the IMS registration by sending a response including the user's public user identities to the user equipment, for example in a SIP OK or "200 OK" message.

For IMS session handling, i.e. establishment or modification, the UE initiates a SIP/IMS session by sending e.g. a SIP INVITE message to the AF/P-CSCF entity, which contains as parameters e.g. a public user identity IMPU, and an IP address of the user (step 12). In response thereto, the AF/P-CSCF entity forwards the INVITE message to the S-CSCF (step 13), and retrieves (gets) the stored IMSI using the public user identity IMPU received in the INVITE message as a searching key (step 14). If the INVITE message does not include a valid public user identity IMPU, the P-CSCF uses the first stored identity which it received from the earlier 200 OK response of step 9. Then, the S-CSCF responds to the P-CSCF e.g. by an OK message, and the AF/P-CSCF responds to the UE e.g. by forwarding the thus received OK message (steps 15 and 16). Subsequently, the AF/P-CSCF entity pushes (sends) session information and the retrieved IMSI to the PCRF cloud (step 17). Optionally, the push operation may take place before the acknowledgement ("OK", message in step 15) to the INVITE message is received.

For bearer establishment on the user/transport plane, further bearers (dedicated bearers) may be established for the session, initiated either by the network or by the user equipment UE. In the example of Fig. 6, the user equipment UE initiates a new bearer sending the user identifier, e.g. the IMSI of the user and further parameters in the message (step 18). The destined PCEF/GW entity copies the user identifier, e.g. IMSI from the bearer establishment message (step 19), and sends the user identifier, e.g. IMSI to the PCRF cloud (step 20), which may be realized e.g. within an authorization request message (with possible other parameters). In step 21, the PCRF cloud responds by possibly sending PCC rule(s), and the PCEF/GW entity responds to the bearer establishment (step 22).

Thus, a binding of policy-controlled IMS sessions of the user or user equipment UE is established to the PCRF cloud, i.e. to the (logical) policy control entity, by way of the user identifier, e.g. the IMSI of the user. That is, a PCRF discovery is achieved, thus enabling to contact the same PCRF as the other network elements relevant to the user session(s) of the user equipment UE.

The PCRF cloud may use e.g. one or more of the following criteria to select a PCRF entity from the cloud of PCRFs: Certain country codes of the user identifier lead to a certain PCRF, certain network codes of the user identifier lead to a certain PCRF, the number part of the user identifier is used for selecting a certain PCRF (to get a more randomized distribution between the PCRF entities e.g. to balance the loading) e.g. so that certain ranges lead to a certain PCRF.

As the above-described signaling of Fig. 6 only represents one non-limiting example of a utilization of an embodiment of the present invention, the following variations and modifications may be realized by further embodiments of the present invention.

As an alternative (which is not depicted by way of a signaling diagram, but would basically alter steps 17 and 20 of Fig. 6), the AF/P-CSCF itself may use the user identification, i.e. the user identification parameter retrieved during session handling, for selecting a PCRF entity from among the available PCRF entities in the network, i.e. from the PCRF cloud. When other related network elements (e.g. gateways/PCEFs or the another network's PCRF) aiming at selecting the same PCRF entity use the user identifier and same criteria for the selection, the entities end up selecting the same PCRF entity. The order of selections may also be vice versa. Namely, firstly a gateway/PCEF uses the user identification, i.e. the user identification parameter obtained during bearer handling, for selecting a PCRF entity from among the available PCRF entities in the network, i.e. from the PCRF cloud. When other related network elements (e.g. AF/P-CSCF or the another network's PCRF) aiming at selecting the same PCRF entity use the user identifier and same criteria for the selection, the entities end up selecting the same PCRF entity.

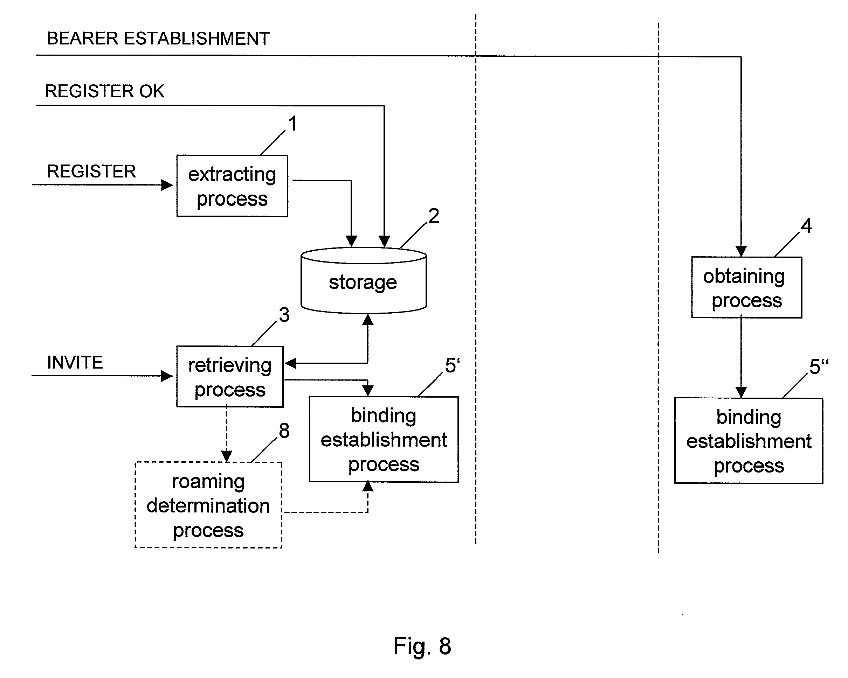

Reference for this alternative is made to Fig. 8, wherein an exemplary equipment configuration therefor is depicted.

The selection criteria could be for example one or more of the following: Certain country codes of the user identifier lead to a certain PCRF, certain network codes of the user identifier lead to a certain PCRF, the number part of the user identifier is used for selecting a certain PCRF (to get a more randomized distribution between the PCRF entities e.g. to balance the loading) e.g. so that certain ranges lead to a certain PCRF.

As an alternative for the user identification parameter used for establishing a session control binding for user sessions (PCRF discovery), in addition or besides to the IMSI (as used according to Fig. 6), there may also be used other parameters from the session registration message (of step 12 of Fig. 6). For example, the AF/P-CSCF may take the public user identity IMPU or a home network domain name of the user equipment UE. Generally, any network access identifier NAI may be used, which is present or derivable as exemplarily described above for the IMSI. This may be the case, if the IMSI is not available on the bearer level. The PCRF cloud shall then solve the dependence of the PCRF entity on the user identities in such a way that the IMSI from the SIP/IMS plane and the bearer level user identity lead to the same PCRF entity.

In addition to the above-described sequence, there may also be determined whether the user equipment is roaming, i.e. is located in a network other than its home network. Thus, in addition to the non-roaming case of Fig. 6, there may also be covered a roaming case or a case of a local breakout. To this end, for example, the AF/P-CSCF entity may find out that the user equipment is roaming by possibly using an P-Access-Network-Info header or an IP address or one of the user identities available in the SIP registration message (e.g. message in step 6 of Fig. 6) or in a SIP session message (e.g. message in step 12 of Fig. 6). Then, the PCRF discovery for establishing a control session binding for roaming user equipments may be different or simplified. For example, a certain home network PCRF may be allocated for roaming UEs, or a certain home network PCRF may be allocated for roaming UEs of a certain visited realm or domain. The AF/P-CSCF may then select a home network PCRF based on the roaming information (and on possible realm and/or domain and/or further detailed parameters). The other related network elements (e.g. a visited PCRF) may select the same home PCRF e.g. based on priorities or markings of the available PCRFs, e.g. if the visited PCRF gets a list of possible home network PCRFs (e.g. from a Domain Name Server DNS or from a routing table), the first PCRF on the list may be used for roaming cases or the PCRFs are marked with an additional parameter on the list.

The home network PCRF may also send the information (e.g. the user identification parameter, the session information from the session message exchange) to the "PCRF cloud" of the visited network. Such a sending without a prior request is known as a "push operation" in 3GPP specifications. The PCRF cloud of the visited network may use the user identification parameter for selecting a PCRF entity within the PCRF cloud. The same selection criteria shall be used by other network entities (e.g. PCEFs/gateways) aiming at using the same PCRF entity. The selection criteria could be for example one or more of the following: Certain country codes of the user identifier lead to a certain PCRF, certain network codes of the user identifier lead to a certain PCRF, the number part of the user identifier is used for selecting a certain PCRF (to get a more randomized distribution between the PCRF entities e.g. to balance the loading) e.g. so that certain ranges lead to a certain PCRF. Alternatively, the home network PCRF itself may use the user identifier for selecting a PCRF entity from the PCRFs available to it in the visited network, i.e. from the "PCRF cloud" of the visited network. Then the home network PCRF may send the session information directly to the selected PCRF in the visited network.

As an alternative to the example of Fig. 6, the bearer establishment on the user/transport plane may be network-initiated instead of being user-initiated as depicted. If the network initiates the bearer, the order and direction of messages 18 to 21 of Fig. 6 is different.

Stated in other words, embodiments of the present invention may include one or more (in any conceivable combination) of the following features for session/media binding to a common control.

In session registration, e.g. IMS registration, extracting of a user identification parameter from a private user identity, e.g. extracting of the IMSI from the IMPI in a registration message exchanged between user equipment and AF/P-CSCF, and storing the IMSI. This extracting and storing may be performed by an AF/P-CSCF entity.

In session registration, e.g. IMS registration, storing the public user identity in association with the extracted user identification parameter, e.g. storing the IMPU received in the registration response from the S-CSCF. This storing may be performed by an AF/P-CSCF entity.

According to an exemplary implementation, the actual header in the registration message, e.g. the SIP REGISTER request, is the Authorization header, with the username directive being set to the value of the private user identity. The AF/P-CSCF may receive the user's public user identities within a 200 OK response (P-Associated-URI header).

In session handling, e.g. IMS session establishment or modification, retrieving the user identification parameter in accordance with a public user identity, e.g. retrieving the IMSI corresponding to the IMPU, and sending the thus retrieved IMSI in a message (e.g. in a push message) to the PCRF cloud with other session related parameters. This retrieving and sending may be performed by an AF/P-CSCF entity.

Alternatively, in session handling, e.g. IMS session establishment or modification, retrieving the user identification parameter in accordance with a public user identity, e.g. retrieving the IMSI corresponding to the IMPU, and using the user identification parameter for selecting a PCRF entity by the AF/P-CSCF itself. Reference for this alternative is made to Fig. 8, wherein an exemplary equipment configuration therefor is depicted.Furthermore, the AF/P-CSCF entity may also send the IMSI to other network elements that may need to contact the same PCRF.

In bearer handling, e.g. user/transport plane bearer establishment or modification, obtaining a corresponding user identification parameter, e.g. obtaining the user identifier, e.g. IMSI from the bearer establishment/modification signaling (e.g. PDP context establishment/modification), and sending the user identifier, e.g. IMSI to the PCRF cloud. This obtaining may be performed by a PCEF/GW entity needing to contact the PCRF.

Alternatively, in bearer handling, e.g. user/transport plane bearer establishment or modification, obtaining a corresponding user identification parameter, e.g. obtaining the user identifier, e.g. IMSI from the bearer establishment/modification signaling (e.g. PDP context establishment/modification), using the user identification parameter for selecting a PCRF entity by the PCEF/GW itself. Reference for this alternative is made to Fig. 8, wherein an exemplary equipment configuration therefor is depicted.

Furthermore, the PCEF/GW entity may also send the IMSI to other network elements that may need to contact the same PCRF.

In PCRF discovery, establishing a binding for policy-controlled sessions of the user to a (logical) policy control entity on the basis of the user identification parameter, the PCRF cloud (i.e. typically one control element in the cloud) uses the parameter values of the user identifier, e.g. IMSI for allocating the same PCRF/control entity to policy control sessions using/indicating the same the user identifier, e.g. IMSI. The thus selected PCRF entity may indicate its contact info/address to the contacting network elements in its response so as to allow a direct communication without an intermediate entity at the edge of the cloud.

In addition, the first PCRF getting the user identification parameter, i.e. user IMSI or user identity, e.g. from a gateway may send the user identification parameter to a further PCRF cloud. This may be required e.g. in a roaming case with local breakout, where there is a PCRF or PCRF cloud both in the visited network and in the home network.

In summary, according to implementation embodiments of the present invention:
- AF/P-CSCF copies and stores the user identifier parameter from a registration message, and later, upon session establishments or modifications, forwards the parameter with session information to the PCRF or PCRF cloud, or alternatively, the AF/P-CSCF itself uses the parameter for selecting a PCRF entity. No new messages for AF/P-CSCF are needed. There is one new parameter (e.g. Diameter AVP (attribute-value-pair) in the 3GPP Rx and/or Rx+ and/or S9 interface) in the message.
- Gateways contacting the PCRF or PCRF cloud copy the user identifier parameter from the bearer establishment or modification message and send it to the PCRF or PCRF cloud in the authorization request, or alternatively, the gateways themselves use the parameter for selecting a PCRF entity. No new messages for the gateways are needed. There is one new parameter (e.g. Diameter AVP (attribute-value-pair) in the 3GPP Gx or S7 interface) in the message.
- PCRF may need to send the user identifier to the PCRF cloud of another network in a roaming case. The user identifier shall be available in the interface protocol between PCRFs (e.g. S9 interface in 3GPP SAE).

Thus, there result the advantages that the underlying problems are solved in a simple way being backwards compatible with current solutions and implementations of 3GPP and non-3GPP packet access. It is also advantageous that there is enabled to apply policy control efficiently and without any requirements to the user equipment side.

Embodiments of the present invention have so far been described mainly with respect to functional or methodological aspects. Nevertheless, it is to be understood that the present invention also covers respective structural embodiments including e.g. equipments, network elements or nodes, systems etc.

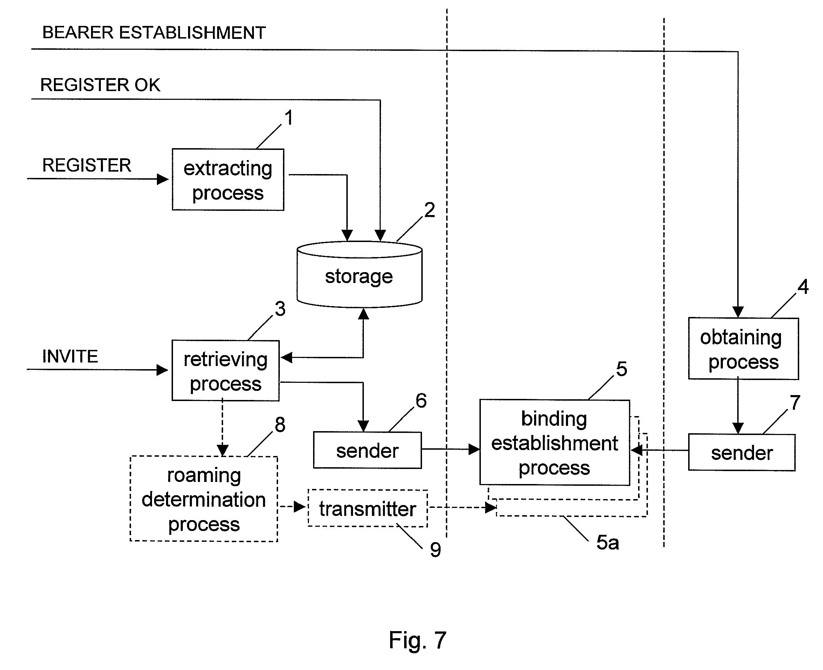

Fig. 7 depicts a block diagram of an equipment for binding control sessions of a user, by which an exemplary structural implementation of an embodiment of the present invention is utilized.

The block diagram of Fig. 7 basically relates to the example signalling diagram of Fig. 6, wherein the respective messages exchanged are indicated by capital letters. The individual blocks represent the functions or processes performed there, while the implementation thereof may be realized by way of any means including software and hardware. For example, any function or process block may be implemented by an individual processor or circuitry being configured accordingly. Also, for example, two or more function or process blocks may be implemented by a common processor or circuitry being configured accordingly. In general, the function or process blocks of Fig. 7 are essentially intended to represent a structural implementation of the respective functions or processes as described above. For the sake of clarity, those blocks are omitted in the exemplary illustration of Fig. 7, which are conventionally known and are not essential for the present invention. Such conventionally known blocks may for example include ordinary sender and/or transmitter means for the messages exchanged.

The arrows between the blocks illustrate a physical connection there-between as well as the direction of signal flows there-between.

According to the example structure depicted in Fig. 7, a first section of an equipment according to an embodiment of the present invention is illustrated to the left of the left dashed line, a second section thereof is illustrated to the right of the right dashed line, and a third section thereof is illustrated in-between the two dashed lines.

In the depicted embodiment the first section comprises a means or processor 1 adapted to extract a user identification parameter, e.g. IMSI, from a private user identity, e.g. IMPI, during session registration, e.g. from a SIP REGISTER message. The extracted parameter may be stored in a storage 2. The equipment further comprises a means or processor 3 adapted to retrieve the user identification parameter, e.g. IMSI, in accordance with a public user identity, IMPU, during session handling, i.e. session establishment or modification, e.g. upon receipt of a SIP INVITE message. The storage 2 may thus be adapted to store the public user identity, e.g. IMPU, during session registration, e.g. upon receipt of a SIP REGISTER OK message, in association with the extracted user identification parameter, e.g. IMSI. The means or processor 3 may thus be adapted to retrieve the user identification parameter, e.g. IMSI, during session handling based on the public user identity, e.g. IMPU, stored during session registration and a public user identity, e.g. IMPU, received in a session establishment or modification message.

In the depicted embodiment the second section comprises a means or processor 4 adapted to obtain a corresponding user identification parameter, e.g. IMSI, during bearer handling, i.e. session establishment or modification, e.g. from a bearer establishment message.

In the depicted embodiment the third section comprises a means or processor 5 adapted to establish a binding for policy-controlled sessions of the user UE on the basis of the user identification parameter, IMSI, which has been provided by the first and second sections of the present equipment. This binding may thus be effective to a (logical) policy control entity, such as a PCRF cloud.

In order to provide the retrieved user identification parameter from the first section and the obtained user identification parameter from the second section to the binding establishment process of the third section, there are provided respective senders 6 and 7.

According to an example implementation, the means or processor 5 is adapted to establish the binding by selecting a common policy control entity PCRF from a plurality of available policy control entities (PCRF cloud) so that policy-controlled sessions of the user (UE) are controlled by the same policy control entity.

According to an optional implementation (being indicated in Fig. 7 by dashed blocks and arrows), an equipment according to an embodiment of the present invention may further comprise a means or processor 8 adapted to determine that the user (UE) is roaming, i.e. located in a visited network instead of its home network, a transmitter 9 adapted to transmit the user identification parameter, e.g. IMSI, from the (logical) policy control entity to a second (logical) policy control entity concerned with the roaming user, and a processor 5a adapted to establish a second binding for policy-controlled sessions of the user to a second (logical) policy control entity on the basis of the user identification parameter. Although Fig. 7 indicates first and second (logical) policy control entities to be arranged at a single entity, i.e. the third section of the present equipment, they may also be arranged at distinct physical entities.

Fig. 8 depicts a block diagram of an equipment for binding control sessions of a user, by which an exemplary structural implementation of another embodiment of the present invention is utilized.

According to Fig. 8, blocks and processes same or similar to those according to Fig. 7 are denoted by the same numerals and are not described in detail once more.

Basically, the equipment according to the embodiment of Fig. 8 differs from that of Fig. 7 in that the first and/or second section is adapted to select a policy control entity itself. Namely, the first and/or second section of the equipment is provided with respective processors 5', 5''. In detail, a processor 5' in/at a first instance is provided at the first section to select a policy control entity using the user identification parameter retrieved during session handling, and/or a processor 5" in/at a second instance is provided at the second section to select a policy control entity using the user identification parameter obtained during bearer handling. Thus, an establishing of the binding is based on the policy control entity selected in the first and/or second instances so that policy-controlled sessions of the user are controlled by the same policy control entity. Thereby, a logical binding (not depicted in Fig. 8) is established between the first and third sections and/or between the second and third sections of the exemplary equipment configuration of Fig. 8. It is to be understood that one of the two processors 5' and 5" is sufficient to this extent.

According to an optional implementation (being indicated in Fig. 8 by dashed blocks and arrows), and similar to the optional implementation according to Fig. 7, an equipment according to an embodiment of the present invention may further comprise a means or processor 8 adapted to determine that the user (UE) is roaming, i.e. located in a visited network instead of its home network. The result of such a roaming determination may affect the binding establishment in a similar manner as described above in connection with Figs. 6 and 7.

According to an exemplary implementation of the present invention, the three sections of an equipment according to an embodiment of the present invention, as illustrated in Figs. 7 and 8, may be realized in distinct physical entities, for example in distinct network elements or nodes. For example, the first (left) section may be realized in/by an application function and/or a proxy call session control function and/or a corresponding entity, the second (right) section may be realized in/by a gateway and/or policy and charging enforcement function and/or a corresponding entity, and/or the third (middle) section may be realized in/by a policy control entity such as a policy and charging rules function.

Any functions, methods and operations described above may of course be implemented by way of software and/or hardware.

In general, it is to be noted that respective functional elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Furthermore, method steps and functions likely to be implemented as software code portions and being run using a processor at one of the entities are software code independent and can be specified using any known or future developed programming language such as e.g. Java, C++, C, and Assembler. Method steps and/or devices or means likely to be implemented as hardware components at one of the entities are hardware independent and can be implemented using any known or future developed hardware technology or any hybrids of these, such as MOS, CMOS, BiCMOS, ECL, TTL, etc, using for example ASIC components or DSP components, as an example. Generally, any method step is suitable to be implemented as software or by hardware without changing the idea of the present invention. Devices and means can be implemented as individual devices, but this does not exclude that they are implemented in a distributed fashion throughout the system, as long as the functionality of the device is preserved. Such and similar principles are to be considered as known to those skilled in the art.

Generally, for the purpose of the present invention as described herein above, it should be noted that
- a communication device or terminal may for example be any device by means of which a user may access a network and/or a server of such network; this implies mobile as well as non-mobile devices and networks, independent of the technology platform on which they are based; only as an example, it is noted that terminals operated according to principles standardized by the 3^{rd} Generation Partnership Project 3GPP and known for example as UMTS terminals (Universal Mobile Telecommunication System) are particularly suitable for being used in connection with the present invention, nevertheless terminals conforming to standards such as GSM (Global System for Mobile communications) or IS-95 (Interim Standard 95) may also be suitable;
- networks referred to in this connection may comprise mobile and fixed network sections independent of the type of technology on which the networks are operated, for example those networks operate on the basis of the Internet Protocol IP, independent of the protocol version (IPv4 or IPv6), or on the basis of any other packet protocol such as User Datagram Protocol UDP, etc.
- devices can be implemented as individual devices, devices may also be implemented as a module configured to accomplish interoperability with other modules constituting an entire apparatus, e.g. a module device may be represented as a chipset or chip card e.g. insertable and/or connectable to an apparatus such as a mobile phone, or a module may be realized by executable code stored to a mobile phone or other device for execution upon invocation.

Although described above mainly with respect to methods, procedures, an apparatus and modules thereof, it is to be understood that the present invention also covers a computer program products for implementing such methods or procedures and/or for operating such apparatuses or modules, as well as computer-readable (storage) media for storing such computer program products. The present invention also covers any conceivable combination of method steps and operations described above, and any conceivable combination of nodes, apparatuses and modules described above, as long as the above-described concepts of methodology and structural arrangement are applicable.

In summary, there are provided means for allocating a common control, in particular e.g. the same PCRF, to user sessions, in particular e.g. policy control sessions of the same user equipment. Although these means are generally applicable to different underlying system architectures, networks or technologies, one exemplary application area is the use in policy control in an IMS multiple-access system in accordance with 3GPP standards. Such means may be suitable for being applied in an evolved network architecture (SAE) where policy control elements (PCRF) and various gateways of both home and/or visited network may be involved, and where a user or user equipment may have simultaneous access through different access networks in order to find a common PCRF entity. Such means may for example involve extracting and storing a user identity at an IMS registration phase, and corresponding user identities upon bearer establishment, and using these for control session binding by a PCRF pool.

There are provided a method and structural means for session and media binding to a common control, in particular to a common policy control. The method may basically comprise extracting a user identification parameter from a private user identity during session registration, retrieving the user identification parameter in accordance with a public user identity during session handling, obtaining a corresponding user identification parameter during bearer handling, and establishing a binding for policy-controlled sessions of the user to a (logical) policy control entity on the basis of the user identification parameter.

Even though the invention is described above with reference to the examples according to the accompanying drawings, it is clear that the invention is not restricted thereto. Rather, it is apparent to those skilled in the art that the present invention can be modified in many ways without departing from the scope of the inventive idea as disclosed in the appended claims.

## Claims

1. A method comprising:
extracting a user identification parameter from a private user identity during session registration,
retrieving the user identification parameter in accordance with a public user identity during session handling,
obtaining a corresponding user identification parameter during bearer handling, and
establishing a binding for policy-controlled sessions of the user to a policy control entity on the basis of the user identification parameter.

2. The method according to claim 1, further comprising:
storing the public user identity during session registration in association with the extracted user identification parameter.

3. The method according to claim 2, wherein the retrieving of the user identification parameter during session handling is based on the public user identity stored during session registration and a public user identity received in a session establishment or modification message.

4. The method according to any one of the preceding claims, further comprising:
sending the user identification parameter retrieved during session handling and the user identification parameter obtained during bearer handling to the policy control entity, and
wherein the establishing of the binding is based on the sent user identification parameters.

5. The method according to any one of claims 1 to 3, wherein the establishing of the binding comprises at least one of:
selecting, in a first instance, a policy control entity using the user identification parameter retrieved during session handling, and
selecting, in a second instance, a policy control entity using the user identification parameter obtained during bearer handling,
wherein the establishing of the binding is based on the policy control entity selected in at least one of the first and the second instance so that policy-controlled sessions of the user are controlled by the same policy control entity.

6. The method according to any one of the preceding claims, wherein the establishing of the binding comprises:
selecting a common policy control entity from a plurality of available policy control entities so that policy-controlled sessions of the user are controlled by the same policy control entity.

7. The method according to claim 5 or 6, wherein the selecting is based on at least one of a country code of the user identification parameter, a network code of the user identification parameter, a number part of the user identification parameter.

8. The method according to any one of the preceding claims, further comprising:
determining that the user is roaming, and
transmitting the user identification parameter from the policy control entity to a second policy control entity concerned with the roaming user, and
establishing a second binding for policy-controlled sessions of the user to the second policy control entity on the basis of the user identification parameter.

9. The method according to claim 8, wherein the binding is established to a predetermined local policy control entity on the basis of the roaming of the user.

10. The method according to claim 8 or 9, wherein the second binding is established on the basis of priorities or markings of available policy control entities.

11. The method according to any one of the preceding claims, wherein the user identification parameter is one of an international mobile subscriber identity, IMSI, an IP multimedia public identity, a home network domain name, and an Internet protocol, IP, address of the user.

12. The method according to any one of the preceding claims, wherein the private user identity is an IP multimedia private identity, and wherein the public user identity is an IP multimedia public identity.

13. The method according to any one of the preceding claims, wherein the session registration and the session handling pertain to a session in accordance with an IP-based multimedia subsystem.

14. The method according to any one of the preceding claims, wherein the policy control entity is a set of at least one policy and charging rules function, PCRF.

15. An apparatus comprising:
a processor configured to extract a user identification parameter from a private user identity during session registration,
a processor configured to retrieve the user identification parameter in accordance with a public user identity during session handling,
a processor configured to obtain a corresponding user identification parameter during bearer handling, and
a processor configured to establish a binding for policy-controlled sessions of the user to a policy control entity on the basis of the user identification parameter.

16. The apparatus according to claim 15, further comprising:
a storage configured to store the public user identity during session registration in association with the extracted user identification parameter.

17. The apparatus according to claim 16, wherein a processor is configured to retrieve the user identification parameter during session handling based on the public user identity stored during session registration and a public user identity received in a session establishment or modification message.

18. The apparatus according to any one of claims 15 to 17, further comprising:
a sender configured to send the user identification parameter retrieved during session handling to the policy control entity,
a sender configured to send the user identification parameter obtained during bearer handling to the policy control entity, and
wherein a processor is configured to establish the binding based on the sent user identification parameters.

19. The apparatus according to any one of claims 15 to 17, further comprising at least one of:
a processor configured to select, in a first instance, a policy control entity using the user identification parameter retrieved during session handling, and
a processor configured to select, in a second instance, a policy control entity using the user identification parameter obtained during bearer handling,
wherein the establishing of the binding is based on the policy control entity selected in at least one of the first and the second instance so that policy-controlled sessions of the user are controlled by the same policy control entity.

20. The apparatus according to any one of claims 15 to 19, wherein a processor is configured to establish the binding by selecting a common policy control entity from a plurality of available policy control entities so that policy-controlled sessions of the user are controlled by the same policy control entity.

21. The apparatus according to claim 19 or 20, wherein a processor is configured to select a policy control entity based on at least one of a country code of the user identification parameter, a network code of the user identification parameter, a number part of the user identification parameter.

22. The apparatus according to any one of claims 15 to 21, further comprising:
a processor configured to determine that the user is roaming,
a transmitter configured to transmit the user identification parameter from the policy control entity to a second policy control entity concerned with the roaming user, and
a processor configured to establish a second binding for policy-controlled sessions of the user to the second policy control entity on the basis of the user identification parameter.

23. The apparatus according to any one of claims 15 to 22, wherein the user identification parameter is one of an international mobile subscriber identity, IMSI, an IP multimedia public identity, a home network domain name, and an Internet protocol, IP, address of the user.

24. The apparatus according to any one of claims 15 to 23, wherein the private user identity is an IP multimedia private identity, and wherein the public user identity is an IP multimedia public identity.

25. The apparatus according to any one of claims 15 to 24, wherein the apparatus is included in an IP-based multimedia subsystem.

26. The apparatus according to any one of claims 15 to 25, wherein the apparatus comprises a functionality of at least one of an application function, AF, a proxy call session control function, P-CSCF, a policy and charging enforcement function, PCEF, a gateway, GW, and at least one policy and charging rules function, PCRF.

27. Computer program product comprising software code portions for causing an apparatus, on which the computer program is executed, to carry out the method according to any one of claims 1 to 14.

28. Computer-readable medium embodying the computer program product according to claim 27.
